(19) Europäisches Patentamt
European Patent Office
Office européen des brevets

(11) Publication number: 0 207 464
A2

# (12) EUROPEAN PATENT APPLICATION

(21) Application number: 86108785.6

(22) Date of filing: 27.06.86

(51) Int.Cl.[4]: C 08 K 5/58
C 08 L 27/06

(30) Priority: 28.06.85 JP 141682/85

(43) Date of publication of application:
07.01.87 Bulletin 87/2

(84) Designated Contracting States:
DE GB NL

(71) Applicant: DAINIPPON INK AND CHEMICALS, INC.
35-58, Sakashita 3-chome
Itabashi-ku, Tokyo 174(JP)

(72) Inventor: Seitoh, Toshimi
2848-182, Kubota Sodegaura-cho
Kimitsu-gun Chiba(JP)

(74) Representative: Hoffmann, Klaus, Dr. rer. nat. et al,
Hoffmann . Eitle & Partner Patentanwälte Arabellastrasse 4
D-8000 München 81(DE)

## (54) Vinyl chloride-based resin composition and products using it.

(57) A vinyl chloride-based resin composition is disclosed, comprising a vinyl chloride-based resin and a stabilizer wherein the stabilizer is a mixture of di-n-octyltin-bis(isooctylthioglycolate) and mono-n-octyltintris(isooctylthioglycolate) not substantially containing substances having an absorption peak at 1550 $cm^{-1}$ as determined with an infrared spectrometer. Products using the above resin are also provided.

EP 0 207 464 A2

# VINYL CHLORIDE-BASED RESIN COMPOSITION AND PRODUCTS USING IT

## BACKGROUND OF THE INVENTION

### FIELD OF THE INVENTION

The present invention relates to a vinyl chloride-based resin composition which is reduced in odor and is excellent in heat resistance, and more particularly to a composition suitable for use in production of containers or wrapping materials for foodstuffs.

### DESCRIPTION OF THE PRIOR ART

A vinyl chloride resin is liable to thermally degrade mainly due to the dehydrochlorination reaction, etc., for example, in heat molding thereof and, therefore, its molded articles have disadvantages of e.g., thermal discoloration and a lowering of mechanical strength.

In order to overcome these drawbacks, a stabilizer of metallic soap type, such as lead stearate, cadmium stearate, barium stearate, zinc stearate, etc., and a stabilizer of tin compounds such as alkyltin compounds, etc. may be added.

In the case of containers or wrapping materials for foodstuffs, composite stabilizer comprising a calcium stearate/zinc searate; di-n-octyltin-bis(isoctylthio-glycolate), mono-n-octyltin-tris(isooctylthioglycolate), and the like are used. Particularly for containers or

wrapping materials for foodstuffs which are needed to have high heat resistance and transparency, di-n-octyltin-bis(isooctylthioglycolate) and mono-n-octyltin-tris-(isooctylthioglycolate), or a mixture thereof is used.

These compounds, however, have strong mercapto odor. This unpleasant odor is a problem from a viewpoint of operation environment and seriously lower the product value.

This odor is ascribable to the presence of a small amount of compounds containing a group of

$\equiv Sn-S-Sn \equiv$ or $\equiv Sn-OCO-CH_2-S-Sn \equiv$ as formed

during the preparation of di-n-octyl-tin-bis(isooctylthioglycolate) and mono-n-octyltin-tris(isooctylthioglycolate).

The present inventor has made extensive investigations to overcome the above problems. As a result, it has been found that if a di-n-octyltin bis(isooctylthioglycolate)/mono-n-octyltin-tris(isooctylthioglycolate) mixture not substantially containing substances having an absorption peak at 1550 $cm^{-1}$ as determined with an infrared spectrometer is used as a stabilizer, there can be obtained a vinyl chloride-based compound which has less odor and is excellent in heat resistance.

## SUMMARY OF THE INVENTION

The present invention relates to a vinyl chloride-based resin composition comprising a vinyl chloride-based resin and a di-n-octyltin-bis(isooctylthioglycolate)/mono-n-octyltin-tris(isooctylthioglycolate) mixture not substantially containing substances having an absorption peak at 1550 $cm^{-1}$ as determined with an infrared spectrometer as a stabilizer.

## BRIEF DESCRIPTION OF THE DRAWINGS

Fig. 1 to 3 show infrared absorption spectrum, wherein ratios of absorbance at 1550 $cm^{-1}$ to at 1740 $cm^{-1}$ in an infrared absorption spectrum are 0, 0.24 and 0.25, respectively.

## DETAILED DESCRIPTION OF THE INVENTION

The description "not substantially containing substances having an absorption peak at 1550 $cm^{-1}$ as determined with an infrared spectrometer" as used herein means that the absorbance at 1550 $cm^{-1}$/absorbance at 1740 $cm^{-1}$ ratio in the infrared absorption spectrum of the stabilizer is 0.02/1 or less. As the amount of substances having an absorption peak at 1550 $cm^{-1}$ is larger, the odor tends to be stronger.

The isooctyl group of di-n-octyltin-bis(isooctylthioglycolate) and mono-n-octyltin-tris(isooctylthioglycolate) includes an alkyl group haveing 8 carbon atoms

in which a methyl group is linked at least one of 3, 4 and 5 positions of the carbon skeleton, and a 2-ethylhexyl group.

The stabilizer of the present invention is composed of 95-60 wt% of di-n-octyltin-bis(isooctylthioglycolate) and 5-40 wt% of mono-n-octyltin-tris(isooctylthioglycolate). If the proportion of di-n-octyltin-bis(isooctylthioglycolate) is in excess of 95 wt%, the initial heat resistance is poor. On the other hand, if the proportion of di-n-octyltin-bis(isooctylthioglycolate) is less than 60 wt%, the long term heat resistance (particularly dynamic heat resistance) is poor and odor is strong. It is particularly preferred that the stabilizer of the present invention is composed of 92-70 wt% of di-n-octyltin-bis(isooctylthioglycolate) and 8-30 wt% of mono-n-octyltin-tris(isooctylthioglycolat).

The amount of the stabilizer of the present invention being compounded is preferably 0.5 to 5 parts by weight per 100 parts by weight of the vinyl chloride-based resin. The amount of the stabilizer more preferably compounded from viewpoints of heat resistance, odor, costs and so forth is from 1.0 to 2.5 parts by weight per 100 parts by weight of the vinyl chloride-based resin.

The vinyl chloride-based resin of the present invention includes polyvinyl chloride, chlorinated

polyethylene, a copolymer of vinyl chloride-vinyl acetate, a copolymer of vinyl chloride-vinylidene chloride, a copolymer of vinyl chloride-maleic acid ester, a copolymer of vinyl chloride-acrylic acid ester, a copolymer of vinyl chloride-methacrylic acid ester and the like.

The vinyl chloride-based resin composition of the present invention may contain other stabilizers such as di-n-octyltin maleate polymers, di-n-octyltin-bis(2-ethylhexyl-maleate), calcium stearate, zinc stearate, epoxidated soy bean oil, trisnonylphenyl phosphite, 4,4'-isopropylidene-diphenylalkyl($C_{12}$-$C_{15}$)phosphite, and butylated hydroxytoluene within amounts not deteriorating the objects of the present invention. The amount of these stabilizers being added is chosen from the range of 0.01 to 5 parts by weight per 100 parts by weight of the vinyl chloride-based resin. In addition, the vinyl chloride-based resin composition of the present invention may contain known additives such as lubricants, pigments and fillers, and further other thermoplastic resins such as a polyurethane resin, an ethylene-vinylacetate resin, polyethylene terephthalate, an acryl-based resin, a MBS polymer, an ABS polymer, an epoxy resin and chlorinated paraffin within the range not deteriorating the effects of the present invention.

The vinyl chloride-based resin composition of

the present invention is most suitable for use in the production of non-toxic hard films, sheets and blow bottles because it is of less odor and is excellent in heat resistance. Thus the vinyl chloride-based resin composition of the present invention is useful for the production of containers or wrapping materials for foodstuffs and medical instruments.

The present invention is described in greater detail with reference to the following examples. All parts and percents are by weight.

## REFERENCE EXAMPLE

500 g (2.45 mol) of isooctyl thioglycolate was placed in a 1-liter four-necked flask equipped with a stirrer, a thermometer and a cooling tube and then stirred. The pressure in the flask was reduced for 2 hours to 15-25 mmHg. Then 372 g (1.03 mol) of di-n-octyltinoxide and 28 g (0.106 mol) of mono-n-octyltinoxide were introduced into the flask, and the resulting mixture was well mixed and heated to 60°C. Pressure reduction was started at 60°C. After there were almost no by-product distilling at 60°C under the pressure of 10 mmHg, the temperature was raised to 98°C while maintaining the conditions of 10-20 mmHg. After there were no by-product distilling under the conditions of 95-100°C under the pressure of 10-20 mmHg, the mixture was maintained for 30

minutes under the same conditions as above, and then cooled to 70°C and filtered.

The yield of the organotin compound (a) was 853 g, and the organotin compound (a) was composed of 89.9 wt% of di-n-octyltin-bis(isooctylthioglycolate) and 10.1 wt% of mono-n-octyltin-tris(isooctylthioglycolate). The infrared absorption spectrum of the organotin compound as determined with an infrared spectrometer is shown in Fig. 1.

REFERENCE EXAMPLE 2

500 g (2.45 mol) of isooctyl thioglycolate was placed in a 1-liter four-necked flask equipped with a stirrer, a thermometer and a cooling tube and stirred.

372 g (1.03 mol) of di-n-octyltinoxide and 28 g (0.106 mol) of mono-n-octyltinoxide were introduced in the flask, and the resulting mixture was well mixed and heated to 90°C. Pressure reduction was started at 90°C. After there were almost no by-product distilling at 90°C under a pressure of 10 mmHg, the temperature was raised to 98°C.

After there were no by-products distilling under the conditions of 95-100°C under the pressure of 10-20 mmHg, the mixture was maintained for 30 minutes under the same conditions as above, and then cooled to 70°C and filtered.

The yield of the organotin compound (b) was

848 g, and the organotin compound (b) was composed of 90 wt% of di-n-octyltin-bis(isooctylthioglycolate) and 10 wt% of mono-n-octyltin-tris(isooctylthioglycolate). The infrared absorption spectrum of the organotin compound (b) as determined with an infrared spectrometer is shown in Fig. 2. The infrared absorption spectrum of commercially available di-n-octyltin-bis(isooctylthioglycolate) is also shown in Fig. 3.

EXAMPLES 1 TO 5 AND COMPARATIVE EXAMPLES 1 AND 2

100 parts of a vinyl chloride resin ($\overline{P}$=700), 10 parts of a MBS resin (a copolymer of methyl methacrylate-butadiene-styrene resin, produced by Mitsubishi Rayon Co., Ltd., Metablen C-201), 1 part of stearyl alcohol (produced by Dainippon Ink And Chemicals, Inc., Gleck G-8206), 1 part of an acryl-based processing aid (produced by Mitsubishi Rayon Co., Ltd., Metablen P-551), 0.3 part of an acryl-based processing lubricant (produced by Mitsubishi Rayon Co., Ltd., Metablen L-1000) and 2 parts of a stabilizer as shown in Table 1 were kneaded at a temperature of 185°C for 5 minutes using a 6-inches roll and then a 0.5 mm thick sheet was molded.

This sheet was trimmed to a predetermined size and then placed on an aluminum plate and placed in a geared oven maintained at 190°C. At predetermined time intervals, the sheet was taken out of the oven and evaluated for heat resistance as follows.

Evaluation Standard of Heat Resistance

(Resistance against Thermal Discoloration)

1. Colorless
2. Light yellow
3. Yellow
4. Reddish-orange
5. Black (Dark brown)

Compositions using stabilizers having an absorbance ratio of 0 were good in respect of odor.

Table 1

| | Example 1 | Example 2 | Example 3 | Example 4 | Example 5 | Comparative Example 1 | Comparative Example 2 |
|---|---|---|---|---|---|---|---|
| Composition (parts) | | | | | | | |
| PVC ($\overline{P}$=700) | 100 | 100 | 100 | 100 | 100 | 100 | 100 |
| MBS (C-201) | 10 | 10 | 10 | 10 | 10 | 10 | 10 |
| Higher alcohol (G-8206) | 1 | 1 | 1 | 1 | 1 | 1 | 1 |
| Acryl-based working aid (P-551) | 1 | 1 | 1 | 1 | 1 | 1 | 1 |
| Acryl-based lubricant (L-1000) | 0.3 | 0.3 | 0.3 | 0.3 | 0.3 | 0.3 | 0.3 |
| Stabilizer used | | | | | | | |
| Di-n-octyltin-bis(isooctylthioglycolate) on the market (0.25) | - | - | - | - | - | 2 | - |
| Stabilizer (a) of Reference Example 1 (0) | 2 | - | - | - | - | - | - |
| Di-n-octyltin-bis(isooctylthioglycolate) (0) | - | 1.88 | 1.8 | 1.7 | 1.4 | - | 2 |
| Mono-n-octyltin-tris(isooctylthioglycolate) (0) | - | 1.12 | 0.2 | 0.3 | - | - | - |
| Di-n-octyltin-bis(2-ethylhexylthioglycolate)(0) | - | - | - | - | 0.6 | - | - |
| Physical Properties | | | | | | | |
| Heat resistance in the oven at 190°C | | | | | | | |
| 0 minute | 1 | 1 | 1 | 1 | 1 | 1 | 1 |
| 10 minutes | 1 | 1 | 1 | 1 | 1 | 1 | 1-2 |
| 20 minutes | 1 | 1 | 1 | 1 | $1^{2}$-2 | 1-2 | 2 |
| 30 minutes | 1-2 | 1-2 | 1-2 | 1-2 | 1-2 | 3 | 3 |
| 40 minutes | 3 | 3 | 3 | 3 | 3 | 4 | 4 |

Note: The figures in the parentheses indicate the absorbance ratios of the substances at 1550 $cm^{-1}$/1740 $cm^{-1}$.

EXAMPLES 6 TO 10 AND COMPARATIVE EXAMPLES 3 TO 6

100 parts of a vinyl chloride resin ($\bar{P}$=700), 10 parts of an MBS resin (Metablen C-201), 1 part of stearyl alcohol (Gleck G-8206), 1 part of an acryl-based working aid (Metablen P-551), 0.3 part of an acryl-based lubricant (Metablen L-1000), 0.5 part of di-n-octyltin maleate, and 2.5 parts of a stabilizer as shown in Table 2 were kneaded at a temperature of 185°C for 5 minutes using a 6-inches roll. During this kneading process, odor was examined. After kneading for 5 minutes, the composition was molded into a 0.5 cm thick sheet. 50 g of the sheet was trimmed to the predetermined size and soaked in 500 cc of hot water maintained at 60°C for one week. Then the odor of the hot water was examined.

The sheet (50 g) was also soaked in 20% aqueous ethanol solution maintained at 40°C for one week in place of the hot water maintained at 60°C. Then the odor of the 20% aqueous ethanol solution was examined.

The thermal resistance test was conducted in the oven maintained at 200°C in the same manner as in Example 1.

The results are shown in Table 2.

The evaluation of odor was conducted with the odor using a commercially available stabilizer (di-n-octyltin-bis(isooctylthioglycolate), 1550 $cm^{-1}$/1740 $cm^{-1}$

absorbance ratio=0.25) as a standard.

O : The odor is markedly little as compared with the commercially available stabilizer.

Δ : The odor is nearly equal with commercially available stabilizer.

X : The odor is stronger than the commercially available stabilizer.

As apparent from the results of Table 2, the resin composition of the present invention is markedly reduced in odor and is greatly preferred for the operation environment. In addition, the product does not have odor. Products obtained was of high commerical value, and shows acceptable oven heat resistance.

Table 2

| | Example | | | | | Comparative Example | | | |
|---|---|---|---|---|---|---|---|---|---|
| | 6 | 7 | 8 | 9 | 10 | 3 | 4 | 5 | 6 |
| omposition (parts) | | | | | | | | | |
| PVC ($\bar{P}$=700) | 100 | 100 | 100 | 100 | 100 | 100 | 100 | 100 | 100 |
| MBS (C-201) | 10 | 10 | 10 | 10 | 10 | 10 | 10 | 10 | 10 |
| Stearyl alcohol (G-8206) | 1 | 1 | 1 | 1 | 1 | 1 | 1 | 1 | 1 |
| Acryl-based working aid (P-551) | 1 | 1 | 1 | 1 | 1 | 1 | 1 | 1 | 1 |
| Acryl-based lubricant (L-1000) | 0.3 | 0.3 | 0.3 | 0.3 | 0.3 | 0.3 | 0.3 | 0.3 | 0.3 |
| Di-n-octyltin maleate polymer | 0.5 | 0.5 | 0.5 | 0.5 | 0.5 | 0.5 | 0.5 | 0.5 | 0.5 |
| Di-n-octyltin-bis(isooctylthioglycolate) on the market(0.25) | - | - | - | - | - | 2.5 | - | - | - |
| Di-n-octyltin-bis(isooctylthioglycolate) on the market(0.8) | - | - | - | - | - | - | 2.5 | - | - |
| Stabilizer (a) of Reference Example 1 (0) | 2.5 | - | - | - | - | - | - | - | - |
| Stabilizer (b) of Reference Example 2 (0.24) | - | - | - | - | - | - | - | 2.5 | - |
| Di-n-octyltin-bis(isooctylthioglycolate) (0) | - | 2.325 | 2.25 | 2.0 | 1.75 | - | - | - | 2.5 |
| Mono-n-octyltin-tris(isooctylthioglycolate)(0) | - | 0.175 | 0.25 | 0.5 | - | - | - | - | - |
| Mono-n-octyltin-tris(isooctylthioglycolate)(0.01) | - | - | - | - | 0.75 | - | - | - | - |
| lor | | | | | | | | | |
| Odor of Product itself | ○ | ○ | ○ | ○ | Δ | Δ | x | Δ | ○ |
| Odor during the roll kneading | ○ | ○ | ○ | ○ | ○ - Δ | Δ | x | Δ | ○ |
| Odor of 60°C hot water | ○ | ○ | ○ | ○ | ○ - Δ | Δ | x | Δ | ○ |
| Odor of 40°C 20% aqueous ethanol solution | Δ | Δ | Δ | Δ | Δ | Δ | Δ | Δ | Δ |
| at resistance in oven at 200°C | | | | | | | | | |
| 10 minutes | 1 | 1 | 1 | 1 | 1 | 1 | 1 | 1 | 1 |
| 30 minutes | 1 | 1 | 1 | 1 | 1 | 2 | 1-2 | 1 | 2-3 |
| 50 minutes | 2 | 2 | 2 | 2 | 2 | 3 | 2-3 | 1-2 | 3 |
| 60 minutes | 3 | 3 | 3 | 3 | 3 | 4 | 4 | 2-3 | 4 |

te: The figures in the parentheses indicate the 1550 $cm^{-1}$/1740 $cm^{-1}$ absorbance ratio of infrared absorption spectrum.

EXAMPLES 11 TO 14 AND COMPARATIVE EXAMPLE 7

100 Parts of a vinyl chloride resin ($\overline{P}$=700), 10 parts of an MBS resin (Metablen C-201), 1 part of stearyl alcohol (Gleck G-8206), 1 part of an acryl-based working aid (Metablen P-551), 0.3 part of an acryl-based lubricant (Metablen L-1000), 0.3 part of a di-n-octyltin maleate polymer, and 2 parts of a stabilizer as shown in Table 3 were compounded. The resulting composition was kneaded using a 6-inches roll at 185°C at a number of rotation of 19/21 rpm, taken out at predetermined time intervals, and measured for dynamic heat resistance based on a degree of discoloration. The results are shown in Table 3.

The basis of evaluation of dynamic heat resistance is as follows.

O : Colorless

Δ : Light yellow

X : Yellow

The composition of Comparative Example 7 had odor, while the compositions of Examples did not have odor.

**Table 3**

| | Example 11 | Example 12 | Example 13 | Example 14 | Comparative Example 7 |
|---|---|---|---|---|---|
| **Composition** | | | | | |
| PVC ($\overline{P}$=700) | 100 | 100 | 100 | 100 | 100 |
| MBS (C-201) | 10 | 10 | 10 | 10 | 10 |
| Stearyl alcohol (G-8206) | 1 | 1 | 1 | 1 | 1 |
| Acryl-based working aid (P-551) | 1 | 1 | 1 | 1 | 1 |
| Acryl-based lubricant (L-1000) | 0.3 | 0.3 | 0.3 | 0.3 | 0.3 |
| Di-n-octyltin maleate polymer | 0.3 | 0.3 | 0.3 | 0.3 | 0.3 |
| Di-n-octyltin-bis(isooctylthioglycolate) on the market (0.25) | - | - | - | - | 2 |
| Stabilizer (a) of Reference Example 1 (0) | 2 | - | - | - | - |
| Di-n-octyltin-bis(isooctylthioglycolate) (0) | - | 1.88 | 1.7 | 1.4 | - |
| Mono-n-octyltin-tris(isooctylthioglycolate)(0) | - | 0.12 | 0.3 | 0.6 | - |
| **Dynamic heat resistance (roll heat resistance) at 185°C** | | | | | |
| 5 minutes | O | O | O | O | O |
| 10 minutes | O | O | O | O | O |
| 20 minutes | O | O | O | O - Δ | O - Δ |
| 30 minutes | Δ | Δ | Δ | Δ | Δ |
| 40 minutes | Δ -X | Δ-X | Δ-X[2] | X | X |

Note: The figures in the parentheses indicate the absorbance ratio of 1550 $cm^{-1}$/1740 $cm^{-1}$ of infrared absorption spectrum.

While the invention has been described in detail and with reference to specific embodiments thereof, it will be apparent to one skilled in the art that various changes and modifications can be made therein without departing from the spirit and scope thereof.

WHAT IS CLAIMED IS:

1. A vinyl chloride-based resin composition comprising a vinyl chloride-based resin and a di-n-octyltin-bis(isooctylthioglycolate)/mono-n-octyltin-tris(iso-octylthioglycolate) mixture not substantially containing substances having an absorption peak at 1550 $cm^{-1}$ as determined with an infrared spectrometer, as a stabilizer.

2. The composition as claimed in Claim 1, wherein the content of substances having an absorption peak at 1550 $cm^{-1}$ in an infrared absorption spectrum as determined with an infrared spectrometer is an amount that the absorbance at 1550 $cm^{-1}$/absorbance at 1740 $cm^{-1}$ ratio in the infrared absorption spectrum of the stabilizer is not more than 0.02.

3. The composition as claimed in Claim 1, wherein the stabilizer is composed of 95-60 wt% of di-n-octyltin-bis(isooctylthioglycolate) and 5-40 wt% of mono-n-octyltin-tris(isooctylthioglycolate).

4. The composition as claimed in Claim 1, wherein the vinyl chloride-based resin is at least one selected from chlorinated polyethylene, a vinyl chloride-vinyl acetate copolymer, a vinyl chloride-vinylidene chloride copolymer, a vinyl chloride-maleic acid ester copolymer, a vinyl chloride-acrylic acid ester copolymer and a vinyl chloride-methacrylic acid ester copolymer.

5. A film using the composition of Claim 1.

6. A sheet using the composition of Claim 1.

7. A blow bottle using the composition of Claim 1.

FIG. 1

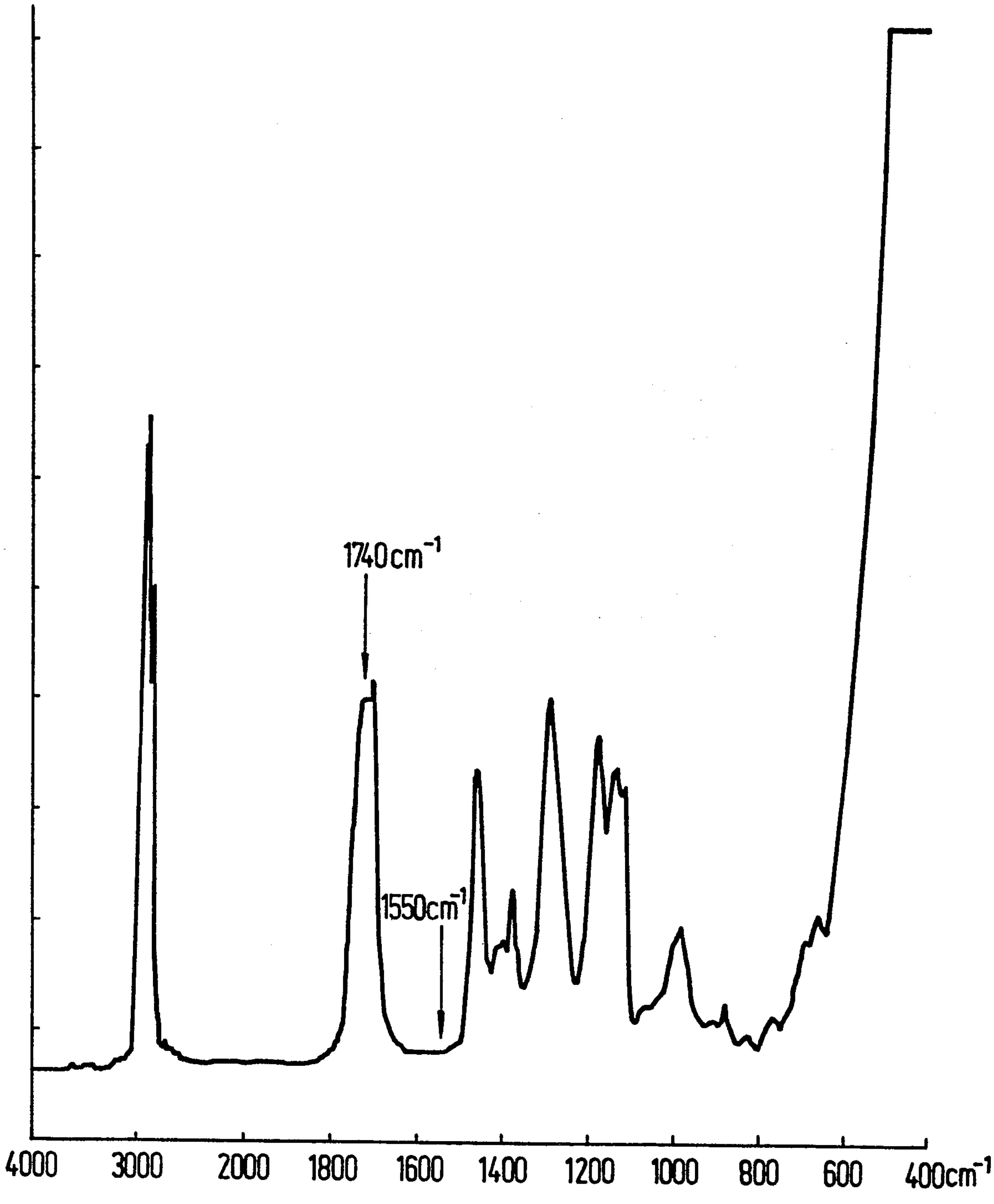
1740cm⁻¹
1550cm⁻¹
4000
3000
2000
1800
1600
1400
1200
1000
800
600
400cm⁻¹

FIG. 2

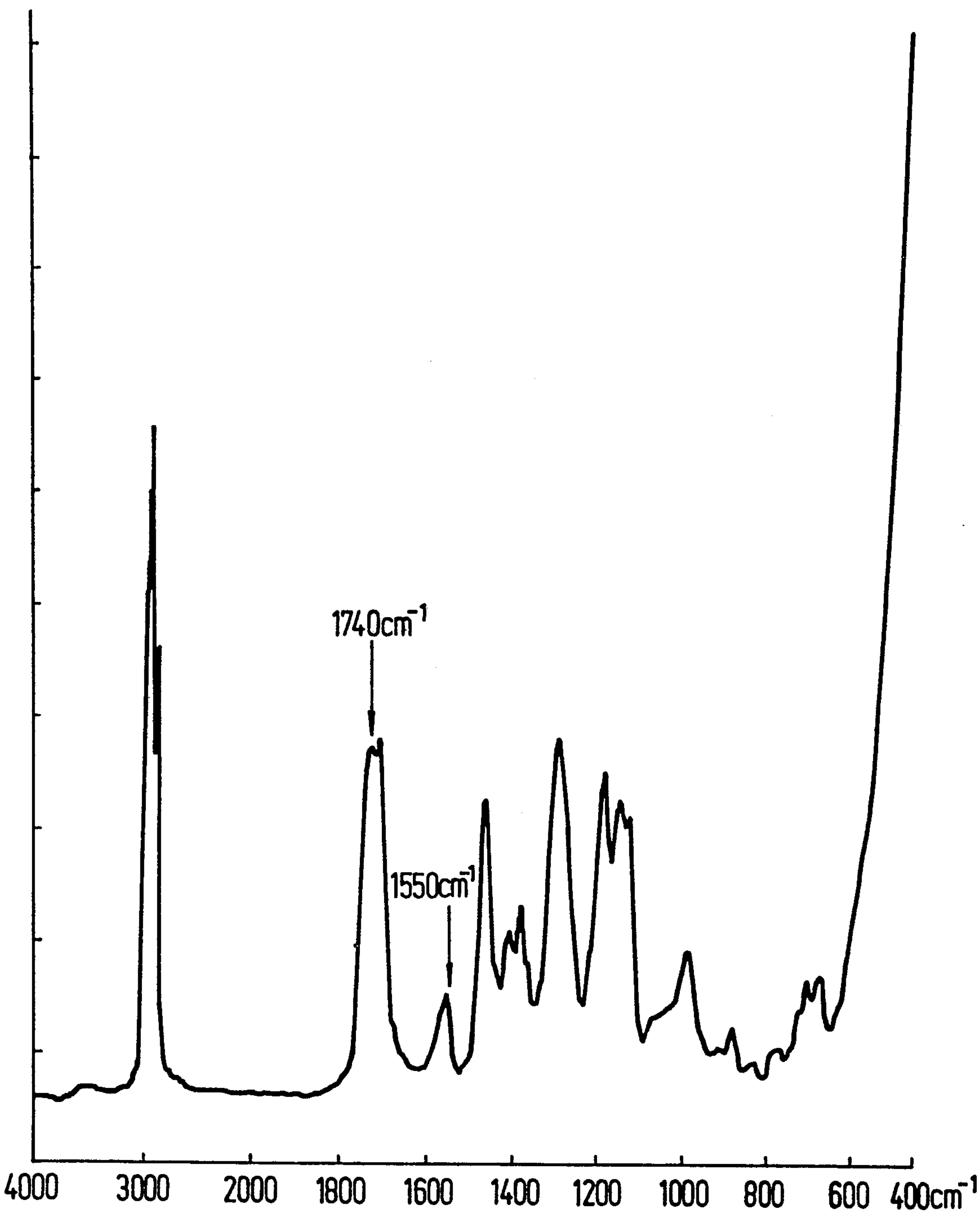
1740cm-1
1550cm-1
4000
3000
2000
1800
1600
1400
1200
1000
800
600
400cm-1

FIG. 3

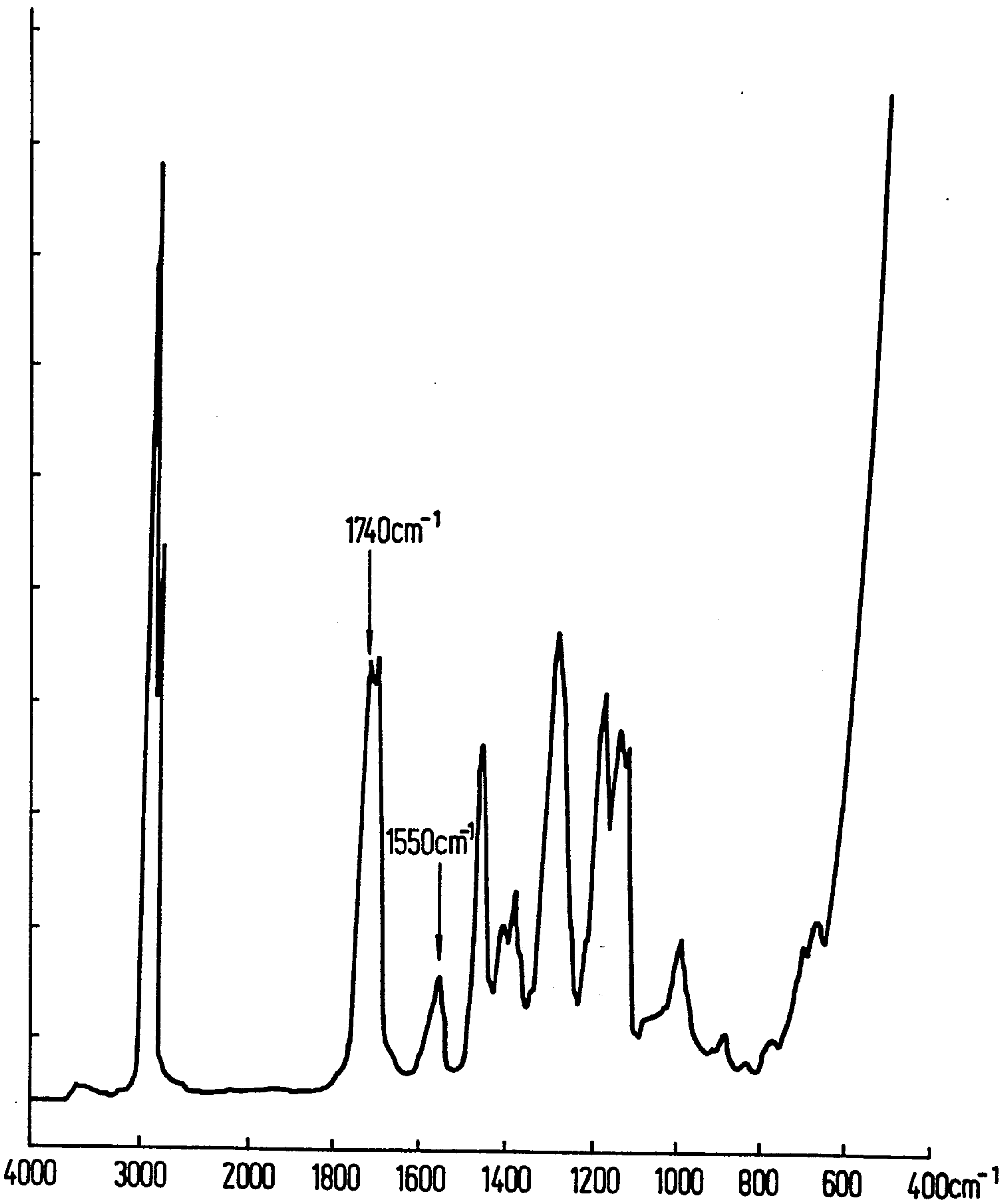
1740cm$^{-1}$
1550cm$^{-1}$
4000
3000
2000
1800
1600
1400
1200
1000
800
600
400cm$^{-1}$